# EUROPEAN PATENT APPLICATION

(11) **EP 1 672 897 A1**
(43) Date of publication of application: **21.06.2006**
(21) Application number: 04292998.4
(22) Date of filing: 15.12.2004
(51) Int. Cl.: H04M 3/533

(54) **Detection of a callback number in a voicemail system**

(71) Applicant: ALCATEL, 75008 Paris (FR)
(72) Inventor: Handekyn, Koen, 9000 Gent (BE)
(74) Representative: Narmon, Gisèle Marie Thérèse

(57) **Abstract**

The present invention relates to a Callback module for use in a telecommunications system. The telecommunications system comprises a voicemail system for recording messages of a calling party and replaying the recorded voicemail messages at later time. The callback module comprises a calling line identification retrieving part that is adapted to retrieve a calling line identity of a calling party, a callback part that is able to call back the calling party using the said calling line identity of the calling party. The callback module further comprises a voicemail analysis part to analyse the recorded voicemail for detecting a call back number and a callback number retrieving part that is adapted to retrieve a callback number detected in the recorded message. Further the call back number forwarding part of the callback module is adapted to instruct the callback part to use the callback number retrieved from the recorded message instead of the calling line identity.

## Description

The present invention relates to a callback module as described in the preamble of claim 1.

Such a callback module is is generally known in the art.

The telecommunications system wherein such a callback module is applied may comprise a voicemail system for recording voicemail messages of a calling party, destined to the called party and replaying the recorded voicemail messages at later time by the called party.

The callback module comprises a calling line identification retrieving part that is able to retrieve a calling line identity corresponding to a phone wherefrom a calling party is making a call. The Calling Line Identity presentation is the mechanism showing the telephone number of a person that is trying to reach you. This number may be shown during the listening of a recorded message such as a voice mail. The call back module further comprises a callback part that is able to set up a call towards this calling party, at later time, using the calling line identity of the calling party.

When a user, i.e. the called party consults his voicemail messages at the voicemail system he may be offered the possibility to call back the terminal from which the originator, i.e. the calling party has left the message.

However, this calling line identity is not always the number whereon he calling party wants to be called back, for instance because of the fact that the calling party is reachable on a different destination number such as the home number instead of the number at work or vice versa or his mobile phone number instead of the home or work number. Thus the Calling line ID of the terminal wherefrom the calling party made the first call, is available but does not always match the number whereon someone wants to be called back.

An object of the present invention is to provide a callback module of the above known type but wherein the calling party may be reachable at another number different from the calling line identity initially available for calling back the calling party.

According to the invention, this object is achieved by the callback module as described in claim 1.

Indeed, by providing the known call-back module with a voicemail analysis part that is able to analyse a recorded voicemail for detecting a call back number that may be mentioned as a preferred number for callback within the recorded voicemail message or even added to the voicemail message, a callback number retrieving part, that is able to retrieve the detected callback number from the recorded message and with a call back number modifying part that finally is adapted to instruct the callback part CP to use the callback number retrieved from the recorded message instead of said calling line identity. The called party now is enabled to call back the calling party on a, by the calling party, preferred callback number.Often people speak in a phone number on a voice mail where they would like to be dialed back to. This is often not the CLID of the phone the original call was coming from.

Hence by detecting and recognising a call-back number that is mentioned inside a recorded voice message this number can be used to provide a called party with a callback possibility having a much larger chance of reaching a calling party that made an unsuccessful attempt to contact the called party. Another characterizing embodiment of the present invention is described in claim 2.

The voicemail analysis part is adapted to perform its voice message analysis of the based on voice recognition techniques.

Another characterizing embodiment of the present invention is described in claim 3.

The voicemail analysis part is adapted to perform its voice message analysis of the based on dual tone multifrequency detection of tones added to the voice message using the number keys on a telephone keyboard.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

The above and other objects and features of the invention will become more apparent and the invention itself will be best understood by referring to the following description of an embodiment taken in conjunction with the accompanying drawings wherein:

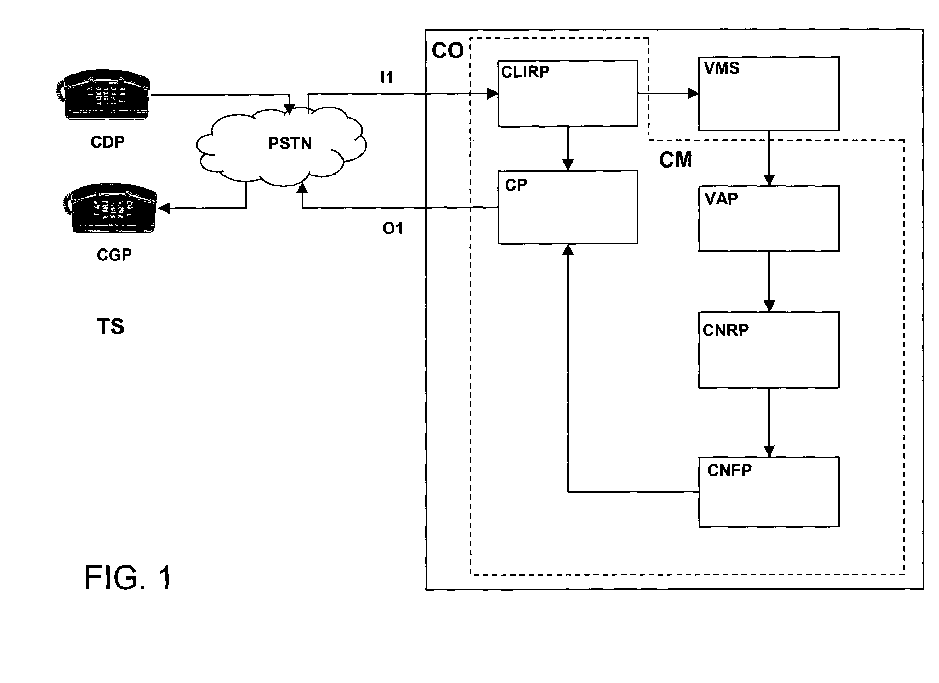

Fig. 1 represents a telecommunications system wherein the callback module is implemented.

In the following paragraphs, referring to the drawings, an implementation of the telecommunications system TS including the callback module CM according to the present invention will be described. In the first paragraph of this description the main elements of the Telecommunications system TS including the call-back module CM of the present invention as presented in FIG. 1 are described. In the second paragraph, all connections between the before mentioned elements and described means are defined. In the succeeding paragraph the actual execution of the method for the traffic distribution method is described.

The telecommunications system of the present invention comprises a plurality of phones, wherefrom only two phones CDP, CGP are shown for reasons of simplicity. The telecommunications system TS further comprises a Central Office CO forming part of a Public Switched Telephone Network PSTN.

The called party phone CDP and the calling party phone CGP are coupled over a PSTN connection to the Central Office CO.

The Central Office of the telecommunications system comprises a voicemail system VMS for recording voice messages of a calling party and replaying the recorded voice messages at later time. The central Office further comprises a callback module CM that in turn is built of a calling line identification retrieving part CLIRP that is adapted to retrieve a calling line identity of a calling party, a callback part CP that is enabling to call back the calling party using the calling line identity of the calling party. The callback module CM further comprises a voicemail analysis part VAP that is able to analyse the recorded voicemail for detecting a call back number, a callback number retrieving part CNRP adapted to retrieve a callback number detected in the recorded message and finally a call back number forwarding part CNFP that is adapted to instruct said callback part CP to use said callback number retrieved from said recorded message instead of said calling line identity.

The calling line identification retrieving part CLIRP has an input-terminal that is at the same time an input-terminal I1 of the central office CO. The calling line identification retrieving part CLIRP further is coupled with a first output to an input of the voicemail system VMS and with a second output to a first input of the callback part CP. The voicemail system VMS further is coupled with an output to an input of the voicemail analysis part VAP that in turn is coupled with an output to an input of the callback number retrieving part CNRP. The call back number forwarding part CNFP has an input that is coupled with an output of the callback number retrieving part CNRP and further has an output that is coupled to a second input of the callback part CP. The callback part CP further has an output-terminal that is at the same time an output-terminal O1 of the Central Office CO.

In order to explain the operation of the present invention it is assumed that a calling party terminal CGP makes a phone call to a called party terminal CDP. The called party is not reachable because the user is involved in another call or not present. The calling party subsequently is forwarded to a voicemail box in a voice mail system VMS and is offered the opportunity to leave a spoken message intended for the calling party. The calling line identification retrieving part CLIRP in the mean time has determined and retrieved the calling line identity, i.e. the telephone number of the calling party. The retrieved calling line identity then is passed to the call back part CP that offers the called party CDP at a for the called party suiting later moment to call back the calling party after listening the message left by the calling party.

As the calling party in the mean time may have moved, went home went working or is reachable at his mobile phone instead of the fixed number wherefrom he made his first call this calling line identification of the calling party is not of much use. Therefore, the calling party for some reason may have mentioned the telephone number whereon he wants to be called back, which is the home number, his mobile number or even his office number and where he is reachable next coming period, The voicemail analysis part VAP, at consultation of the voicemail box by the called party, starts analysing the recorded voice message in order to detect a call back number which is mentioned in the voice message. As the calling party has left a number whereon he wants to be called back, the voicemail analysis part VAP detects the number which was included in the message. The voicemail analysis is executed based on well-known voice recognition methods.

Alternatively, the voicemail analysis part VAP is a dual tone multifrequency detection based analysis part and may detect dual tone multifrequency symbols representing the digits of the callback phone-number as a preferred callback number of the calling party. For instance during or after leaving a voice-message at the voice mail system the calling party may have entered a preferred callback number by entering dual tone multifrequency symbols via the keyboard of the telephone. The voicemail analysis part VAP, at consultation of the voicemail box by the called party, starts analysing the recorded voice message in order to detect a call back number consisting of dual tone multifrequency symbols which is entered before, during or after the voice message. As the calling party has left a number whereon he wants to be called back, the voicemail analysis part VAP detects the number which was included in the message by means of dual tone multifrequency symbols.

Subsequently, the callback number retrieving part CNRP retrieves the callback number detected in said recorded message passed the detected callback number to the call back number forwarding part CNFP that in turn instructs the callback part CP to use the callback number retrieved from said recorded message instead of said calling line identity.

The callback part CP then is ready to provide the called party CDP with the possibility to automatically callback the calling party on a destination number where the calling party currently is reachable.

It is to be noted that the different parts of the telecommunications system may be implemented in a distributed way in all of the network elements varying from a telephone, an additional answering machine to a central office in the PSTN telephone network.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Callback module (CM) for use in a telecommunications system said telecommunications system comprising a voicemail system (VMS) for recording messages of a calling party and replaying said recorded voicemail messages at later time, said callback module (CM) comprising:
a. a calling line identification retrieving part (CLIRP), adapted to retrieve a calling line identity of a calling party;
b. a callback part (CP), adapted to call back said calling party using said calling line identity of said calling party, **CHARACTERISED IN THAT** said callback module (CM) further comprises the following parts:
c. a voicemail analysis part (VAP), adapted to analyse said recorded voicemail for detecting a call back number;
d. a callback number retrieving part (CNRP), adapted to retrieve a callback number detected in said recorded message; and
e. a call back number forwarding part (CNFP), adapted to instruct said callback part (CP) to use said callback number retrieved from said recorded message instead of said calling line identity.

2. Call back module according to claim 1, **CHARACTERISED IN THAT** said voicemail analysis part (VAP) is a voice recognition based analysis part.

3. Call back module according to claim 1, **CHARACTERISED IN THAT** said voicemail analysis part (VAP) is a dual tone multifrequency detection based analysis part.
